# EUROPEAN PATENT APPLICATION

(11) **EP 4 371 946 A1**
(43) Date of publication of application: **22.05.2024**
(21) Application number: 23204719.1
(22) Date of filing: 19.10.2023
(51) Int. Cl.: C02F 1/467, C02F 1/461

(54) **A WATER TREATMENT PROCESS INCORPORATING A SPLIT CELL ELECTROCHEMICAL REACTOR**

(30) Priority: 21.11.2022 US 202217990877
(71) Applicant: OxByEl Technologies, Inc., Mesa, AZ 85202 (US)
(72) Inventor: Madsen, Chris, Mesa, 85202 (US); Montalvo, Preston, Mesa, 85202 (US)
(74) Representative: Groth, Wieland

(57) **Abstract**

A method and apparatus for treating dilute and micro concentrations of pollutants, particularly PFASs, in aqueous solutions. The apparatus including an electrode assembly including a working electrode, a counter electrode, and a cell divider positioned between the working electrode and counter electrode. The cell divider including an ion conducting membrane where the ion conducting membrane selectively conducts protons or hydroxyl anions but is an electronic insulator and a barrier to liquid, contaminant, and gas exchange.

## Description

### Background

There is a need to mineralize low or micro level concentrations of pollutants in aqueous solutions such as groundwater, surface water, stormwater and wastewater. These contaminants result from a wide range of sources including personal care products, pesticides, pharmaceuticals, and industrial chemicals. Of particular concern are per- and polyfluoroalkyl substances (PFASs). Conventional water treatment processes lack the methods and apparatus needed to remove these contaminants cost-effectively in a small footprint with low energy consumption, no secondary waste and/or use of chemicals.

Electrochemical oxidation and/or reduction is an effective method to destroy water contaminants, including PFASs [Anaira Román Santiago, Paola Baldaguez Medina & Xiao Su, Electrochemical remediation of perfluoroalkyl substances from water. Electrochimica Acta 403 (2022) 139635]. However, incumbent systems are not efficient at low PFAS concentrations and are used in applications where these chemicals are pre-concentrated with filters, absorbents, gas fractionation and so on. For example, see US2019/0185352 and WO2018/097875.

### Summary of the Invention

The invention of the current application is a method and apparatus for treating dilute and micro concentrations of pollutants, particularly PFASs, in aqueous solutions. An overview of the preferred embodiment is as follows:
Method steps:
1. If the contaminated solution contains iron at a concentration greater than 0.3 mg/L or preferably greater than 5 ppb, and/or manganese at a concentration greater than 0.05 mg/L or preferably greater than 5 ppb, it is fed to a pre-treatment oxidation unit consisting of permanganate oxidation, greensand oxidation, air oxidation and/or oxygen oxidation or another traditional method to remove the metals to prevent objectionable tastes, odors, staining, and fouling of the wetted surfaces.
2. If the contaminated solution contains suspended particles greater than 10 microns or preferably 5 microns in diameter, it is fed to a pre-treatment filtration unit consisting of one or more methods that include bag filtration, cartridge filtration, flotation, vortex separation, hydrocyclones, centrifuges and other traditional methods to prevent fouling of the electrode surfaces.
3. If the contaminated solution has a pH outside the desired range of pH 2-12, or preferably 4-10, it may be adjusted to prevent corrosion of the wetted surfaces and meet pH discharge requirement for the treated water.
4. After the optional pre-treatment step(s), the contaminated solution is fed into the working electrode compartment of the split cell reactor using continuous or intermittent stable, pulsed, or oscillating flow at ambient temperature. The solution may also be delivered at pressure from 0 - 100 psi, with the desired range of pressure 1-25 psi. The flow rate of solution may be varied depending on the treatment objective and feed concentration of contaminants. For a higher amount of destruction, the solution flow rate may be lowered. For a lower concentration of contaminants, the flow rate may be increased. The solution flows through a working 3D electrode perpendicular to current flow.
5. An applied absolute voltage greater than the thermoneutral decomposition or reduction voltage of the contaminant(s) is applied to the working electrode to effect destruction. The voltage is applied at all points on the 3D electrodes by monitoring a reference electrode voltage. In the preferred embodiments, the electrode port is located at a point where the 3D voltage is lowest. The voltage may be applied with a periodic variation in the voltage as pulse voltage steps (for example square, triangular or sine waves) to enhance ionic discharge and improve energy efficiency.
6. The treated solution with working electrode product gases exits the working electrode compartment to a gas-liquid separator where the product gases are separated from the treated solution and directed to a scrubber and/or alkali wash unit. The gas-free treated solution is directed to drinking water distribution, environmental discharge or a post- treatment unit.
7. The product gas leaves the scrubber and/or alkali wash unit and is either vented, captured for off-take applications, or directed to the optional pre-treatment oxidation unit.
8. For treated solutions with free chlorine reaction products greater than 4 mg/L, the solution may also be directed to a post-treatment reduction step such as filtration, UV treatment, addition of sodium metabisulfite or another traditional method.
9. The treated solution may also be directed to an optional post-treatment pH adjustment unit. A neutral pH range of 5-8 is preferable for drinking water distribution, discharge to protect the environment and/or to prevent corrosion of water handling equipment.
10. Following optional post-treatment step(s), the treated solution is directed to drinking water distribution, sewer, the environment and/or the water re-use facility.
11. An electrolyte solution is recirculated through one or more counter electrode compartments. The electrolyte solution may be delivered at a pressure equal to the contaminated solution to balance the cell assembly pressure thereby extending operational life and preventing product gases such as oxygen, carbon dioxide, chlorine and/or hydrogen from crossing through the ionomer membrane.
12. The electrolyte is directed through the counter electrode compartment(s) and passes through a liquid-gas separator after exiting the compartment to remove the counter electrode gases. The flow rate of the counter electrode electrolyte may be constant or variable depending on the split cell temperature and/or current. To prevent overheating, the flow rate is increased as the electrolyte provides convective cooling for the split cell. At high current, the generation of counter electrode product gas increases. To prevent blocking of the counter electrode electrocatalyst surfaces and resultant performance loss, a higher electrolyte flow rate prevents the buildup of product gas in the compartment.
13. The separation of product gas from the electrolyte solution is performed by one or more methods that include membrane separation, vortex separation, gravity and other traditional methods. After exiting the liquid-gas separator, the separated counter electrode gases are vented, directed to the optional pre-treatment pH adjustment unit, and/or captured for off-take purposes. If the off-take gas is hydrogen, it may be captured for on-site energy storage or backup power generation. If the off-take gas is oxygen, it may be directed to the optional pre-treatment oxidation unit.
14. After liquid-gas separation, the electrolyte solution hardness is measured and if the hardness is greater than 60 mg/L, or preferably greater than 10 mg/L, the electrolyte solution may pass through one or more optional ion exchange units or other traditional water softening devices.
15. The electrolyte solution temperature is also measured and if the temperature is greater than 85°C, or preferably greater than 50°C, the electrolyte solution may pass through one or more optional heat exchangers, radiators, thermoelectric Peltier coolers and/or other traditional cooling methods.
16. The electrolyte solution then passes to a reservoir where conductivity is measured. If the conductivity is below 500µS/cm, or preferably below 5mS/cm, the electrolyte conductivity is increased through the addition of an acid, base, and/or salt.
17. The electrolyte solution conductivity may also be adjusted during operation to keep the working electrode voltage constant. The conductivity of the incoming contaminated solution and the cell current are measured. If the untreated contaminated solution conductivity increases, the electrolyte conductivity is lowered in proportion to the current and electrolyte gap. If the untreated contaminated solution conductivity decreases, the electrolyte conductivity is raised in proportion to the current and electrolyte gap. The conductivity is increased through addition of an acid, base, and/or salt and/or lowered through addition of deionized water.
18. The electrolyte solution pH is also measured. If the pH is greater than 6, or preferably greater than 5, the pH is lowered through the addition of an acid to prevent fouling.
19. Protonic water may cross the ionomer membrane into the counter electrode compartment resulting in an increase in electrolyte volume. The excess electrolyte may be directed continuously or periodically to the untreated contaminated solution and/or the pre-treatment oxidation unit.
20. Produced water from the use of a depolarized cathode as the counter electrode may result in an increase in electrolyte volume due to product water. The excess electrolyte may be directed continuously or periodically to the untreated contaminated solution and/or the pre-treatment oxidation unit.
21. Periodically the optional ion exchange resin bed may be backwashed. The backwash solution may be directed to the untreated contaminated solution, pre-treatment oxidation unit and/or the working electrode liquid-gas separator unit.
22. Periodically the working electrode and counter electrode compartments are cleaned in place. One or more cleaning solutions are used to backwash surface deposits and clean the ionomer membrane. After cleaning, the solutions may be directed to the untreated contaminated solution and/or the pre-treatment oxidation unit.

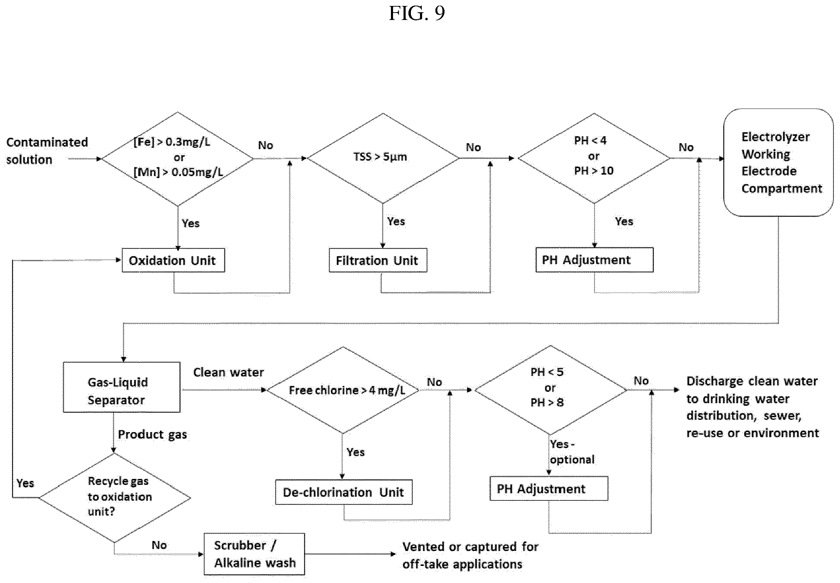

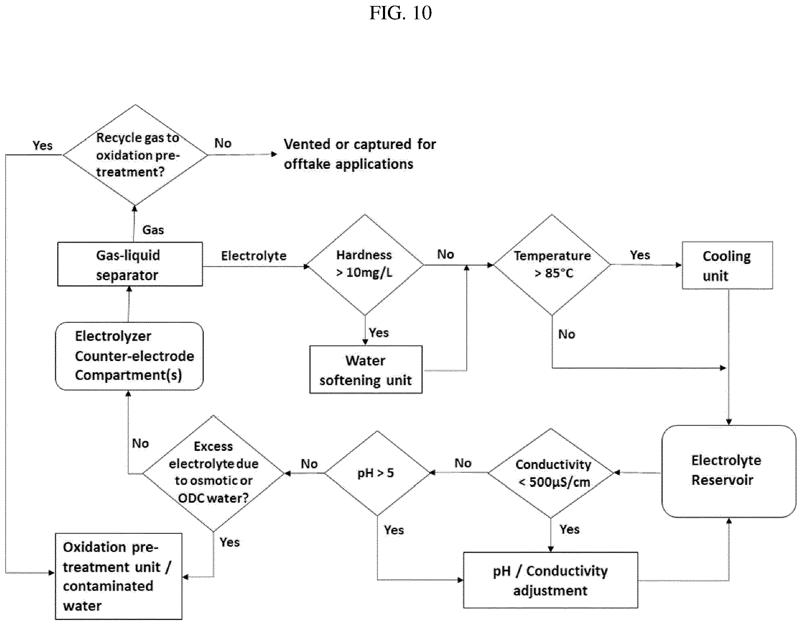

A flowsheet of the water treatment process is shown in Figure 9 and the counter-electrode electrolyte closed loop is shown in Figure 10.

An electrolytic reactor comprised of a divided, radial-field flow cell configuration with a split 3D electrode architecture. Each individual cell assembly comprises one working electrode and two counter electrodes which are divided by an ion conductive membrane. Each 3D electrode assembly comprises two pieces or halves that when assembled, constitutes a single three-dimensional electrode. Each electrode plate comprises an electrically conductive solid frame current collector with 2 insulating frame inserts, and a porous substrate with an electrocatalyst coating in the electrochemically active region.

The non-conductive frame inserts prevent stray currents and corrosion of the electrode plates in the fluid entrance and exit regions where the voltage and current density profiles are greatest. They also provide electrode alignment, gasket sealing, and fluid plumbing. The inserts may consist of polymers, polymer coated metals, ceramics and/or their combination that may be glued or mechanically fastened to the conductive electrode frame. The inserts are keyed to locate the electrode alignments during cell assembly. The electrodes could also be integrated with the non-conductive plumbing pieces, to form one single piece assembly.

The porous three-dimensional electrode architecture increases convective mass transfer and the overall surface area to improve reaction efficiency particularly for dilute concentrations of contaminants. The split electrode enables non-uniform surface area and porosity in the through thickness direction to provide product gas management and uniform current and voltage distributions. The split 3D electrode halves remove the requirement for welding 1 or more electrode meshes together to form an electrode assembly. This reduces the cost of electrodes particularly at large scale where up to 200 welds may be required. The split electrode halves also improve performance by providing even current distribution through the whole mesh area rather than concentrating the current through weld sites. The weld sites heat up due to joule heating by the high current passing through the small cross-sectional area of the weld which negatively impacts performance. The weld sites are also prone to localized corrosion which lowers electrode durability.

The split electrode architecture enables the use of a single half of one or more working electrodes for lower surface area applications and a single half of one or more counter electrodes for lower reaction currents without altering the unit cell assembly or its components.

A unit cell assembly may be formed consisting of one counter electrode with two split halves and one working electrode with two split halves. Alternatively, a unit cell assembly may be formed from two counter electrodes with a single split half and a single working electrode with two split halves or alternatively a single split half. Another unit cell assembly may be formed from one counter electrode with a single split half, a working electrode with a single split half or two split halves, and a second counter electrode with two split halves. Other combinations of single and two split halves working and counter electrodes may be constructed to treat different micropollutants.

The split electrode design provides for the placement of an ion conducting phase in the middle and/or top of one or more electrodes to reduce ion resistivity of low conductivity fluids such as groundwater and drinking water, and lower energy consumption. The split electrode design also provides for the placement of hydroxyl radical scavenger(s) and/or reactive oxygen species scavenger(s) in the middle, top or bottom of one or more electrodes to increase durability of the spilt cell components and prevent partial oxidation of contaminants such as per- and polyfluoroalkyl substances. Electrically non-conductive components of the reactor surround the electrodes and ionomer membranes to prevent electrochemical reactions occurring outside of the electrode active 3D surface area, prevent liquid and gases from leaking in/out of the cells and reactor, and to transfer fluids into and out of the reactor and each individual working and counter electrode compartments in a multicell reactor.

The 3D split electrode may be formed by assembling two 3D single electrode halves across from each other, each electrode half consisting of one or more electrically conductive porous structures coated with an electrocatalyst layer including wire mesh, nets, gauze, expanded metal, foam, aerogel, perforated plate and films, metal fiber cloth and paper, carbon & graphite fiber paper and cloth, individually or in combination.

The high surface area of a three-dimensional electrode may be formed by assembling two single electrode halves across from each other, each electrode half consisting of two expanded metal meshes of niobium coated with a platinum electrocatalyst, forming a mesh assembly. Alternatively, the high surface area of a three-dimensional electrode may be formed by assembling a single electrode half consisting of two expanded metal meshes of niobium coated with a platinum electrocatalyst, forming a mesh assembly.

A lower surface area three-dimensional electrode may be formed by assembling a single electrode half consisting of one expanded metal mesh of titanium coated with a platinum electrocatalyst.

The 3D split electrode may be formed by assembling two single electrode halves across from each other with an ion conducting membrane and/or film placed in the middle. The ion conducting phase may include proton ionomer membrane and/or particles, anion ionomer membrane and/or particles, ion exchange resin beads and/or films, a porous structure coated with an ion conducting layer individually or in combination.

The high surface area of a three-dimensional electrode may be formed by assembling two single electrode halves across from each other, each electrode half consisting of a 3D porous assembly with the hole shape and size for each orientated in different directions, to increase the overall surface area and facilitate product gas removal. The hole opening size may vary to provide asymmetric pore distributions through the whole thickness of the porous assembly or through each half independently. Smaller hole sizes next to the ion conducting membrane and/or ion conducting phase provide a smooth surface to prevent membrane puncture and more uniform current and/or ion transport distributions. Larger hole sizes facilitate product gas removal.

The 3D electrode substrate porous network has a low electrical resistivity, with the surface area and thickness designed for uniform voltage distribution through the length and width of electrode and good electrical charge transport between the electrode substrate base metal and the electrode/electrocatalyst interfaces.

The 3D electrode architecture is designed for two phase flow such that the mineralization of undesirable volatile species will occur simultaneously on the catalyst surface of the working electrode.

The porous morphology of the working electrode with parasite gas generation due to water electrolysis fractionates contaminants such as per- and polyfluoroalkyl substances at the bubble/liquid interface which travels along the surface of the electrocatalyst improving mineralization.

The porous morphology of the counter electrode may include an asymmetric pore distribution through the thickness with larger pore size farthest away from the ionomer membrane to facilitate product gas and heat removal by electrolyte fluid convection.

The cell divider is a solid ion conducting membrane or film placed between the working electrode and one or two counter electrodes that may consist of proton, anion, cation material and/or their combination. The cell divider may alternatively be referred to as a membrane/separator. This structure selectively conducts protons or hydroxyl anions while acting as an electronic insulator and a liquid, contaminant and gas exchange barrier. The membrane may be reinforced with a porous, electrically non-conducting substrate that is also a solid material that prevents liquid and gas exchange between the working electrode and counter electrode compartments.

The ion conducting membrane is a solid film that acts as a barrier between electrode compartments and assemblies. It prevents the contaminated solution, individual contaminants and working electrode product gases from entering the counter electrode compartments. Similarly, the ion conducting membrane prevents the counter electrode electrolyte solution, its components and its product gases from entering the working electrode compartment to keep the working electrode fluids, solids and gases separate from the counter electrode fluids, solids and gases.

The cell divider eliminates the need for the addition of high conductivity supporting solutions and/or solids such as acids, bases and/or salts to contaminated solutions with low conductivity such as groundwater, surface water and/or drinking water sources. The ionomer membrane provides a high conductivity solid electrolyte phase between the working and counter electrode pair and a small thickness to reduce the electrode gap (iR_{gap} loss), typically 50-300 microns, preferably 50-150 microns which lowers the operating cell voltage and energy consumption. The ionomer membrane also contributes to a uniform potential distribution in large-scale electrodes by providing uniform ionic conductivity next to the electrode assemblies.

The cell divider barrier properties preventing gas exchange prevents parasitic redox shuttle reactions that lower the efficiency of the oxidation and/or reduction processes. For example, the depolarization of an anode by product cathode hydrogen gas contacting its surface and subsequently oxidized. The CO₂ gas barrier property of the ionomer membrane prevents the formation of carbonate deposits on cathodes and the liquid barrier properties permit acidic pH in the cathode compartment which prevents hardness, metal and/or metal oxide fouling of the cathode assembly by keeping the cations in solution. Suitable H⁺ ion selective membranes include PFSA type membranes (e.g. Nation^{®}, Aquivion^{®}, Flemion^{®}, Aciplex^{®}, Gore-Select^{®}). Suitable PFAS-free H⁺ ion membranes include CXM 200^{®}, and Pemion^{®}. Suitable PFAS-free OH⁻ ion selective membranes include AXM 100^{®}, Aemion^{®} and Fumasep FAM. Suitable separators include battery separator coated/impregnated with ionomer and glass fiber mat coated/impregnated with ionomer. The ionomer and membranes may be chemically stabilized and can be reinforced with porous substrates (e.g. PTFE^{®}, PEEK^{®} and glass fiber) to provide mechanical stability. The ionomer membranes may include an oxidant scavenger such as cerium 3+ or 4+ ion, cerium oxide nanoparticles, doped cerium oxide, zirconia and/or their combination throughout the material and/or a coating on the surfaces of the membrane to improve membrane durability.

Electro-osmotic drag of water molecules across the ionomer membrane due to the electric field may occur. This water flux may be reduced or prevented by one or more of the following procedures in the receiving electrode compartment. Low temperature operation, low current operation, the application of a porous hydrophobic barrier coating onto the membrane, placement of a thin porous hydrophobic film at the interface between the membrane and electrode assembly and/or providing a higher operating pressure than the opposite compartment. Any protonic water volume that does cross the membrane is small and does not impact performance or operation of the cell. Any small excess in the volume of electrolyte is periodically directed to the pre-oxidation unit or the contaminated solution.

The cell divider is coated on one or more faces with a protective layer. The protective layer provides a barrier to chemical attack from the contaminated solutions and electrolytes and wear resistance to suspended particles flowing in the solutions. The coating also provides indentation and puncture resistance to electrode over-compression and its sharp surfaces on the electrocatalyst coatings and 3D substrate architecture. This is important particularly for thin membrane thicknesses to prevent hot spots. The protective layer is comprised of one or more durable metal oxides and/or their mixtures including titanium oxide, tin oxide, zinc oxide, tungsten oxide, tantalum oxide, niobium oxide and boron doped diamond. Particles with diameters less than 10 microns, preferably with diameters less than 2 microns, may be directly applied to the surface by traditional deposition methods such as plasma spraying and vapor deposition. Alternatively, aqueous and/or solvent solutions consisting of one or more ionomers and/or a PFAS-free polymers and metal oxide particles may be coated onto the membrane face using traditional methods such as painting, slot die coating or spraying with the ionomer phase acting as an adhesion agent. Once the coating has dried, it may be hot pressed at 135°C for 10 minutes to improve its adhesive strength.

The protective layer may be applied on top of one or more membrane faces already coated with an oxidant scavenger layer. Alternatively, the oxidant scavenger may be incorporated into the protective layer. For very aggressive environments, a multilayer coating of one or more protective layers and oxidant scavenger layers may be constructed. Multilayer slot die coating and/or other traditional coating methods may be used.

An insulating protective coating may also be applied on top of the 3D electrode surfaces that are adjacent to and/or in contact with the ionomer membrane. Preferably, the coating is applied to the high spots that contact the membrane only. This coating prevents the electrocatalytic oxidation of the ionomer membrane material. Alternatively, a thin, porous film consisting of an insulating, corrosion resistant material may be placed in the interface between the electrode surface and membrane. This porous film may also be constructed of an oxidant scavenger only, and/or both a mixture of oxidant scavenger and insulating protective material. The thin substrate for the protective and/or insulating coating may consist of a polymer mesh, metal mesh, metal, polymer, glass and/or carbon fiber paper or other suitable porous film. The coatings may consist of CeO₂, SiO₂, Al₂O₃, porcelain, quartz and/or other ceramics.

Fluids generally travel from the lower port opening to the upper port opening of the cell assembly fluid housing, passing through flow stabilizers/distributors. Fluid flow distributors may be sets of narrow slot-hole gaps, porous frit, grid porous plate or porous beads and are incorporated at the entrance, exit and optionally at points along the electrode to prevent flow channeling. The flow distributor material may be inert, and electrically and/or ionic conducting. Pulse flow, pulse ultrasound, and/or oscillating flow (e.g. centrifugal pump), pressure pulses are used to detach bubbles and increase mass transport by reducing the size of the boundary layer.
Each electrode half fits on either side of the fluid housing, with its 3D electrochemically active area protruding into the fluid compartment forming a single 3D electrode. Thus, when fully assembled, the fluids pass through the three-dimensional electrode assembly. The cell assembly fluid housing may consist of polymers, polymer coated metals, ceramics and/or their combination. The housing material is electrically non-conductive and corrosion resistant to the fluid, its components and reaction products. A single electrode half may also be used with the fluid housing.

One or more holes may be incorporated into the fluid housing of both working and counter electrodes to provide ports for reference electrodes. Rubber plugs, caps or other suitable method may be used to seal the ports when not in use to prevent fluid leaks.

Outer compression plates are compressed to seal all internal gaskets with fasteners. Fasteners used to apply force to the compression plates could be replaced by a mechanical compression device such as pneumatics or an electrical motor. Fastening members could also be incorporated into the compression plates or into an external housing. This external housing could also include alignment bars and could also include the electrical bus bars. The compression plates may consist of metal, fiber reinforced polymers, polymer and/or their combination with enough stiffness to provide uniform pressure to effect sealing.

The gasket seals are electrically non-conductive and corrosion resistant to the fluid, its components and reaction products. They may consist of rubber, silicone, polymer coated metals, other traditional sealing materials and/or their combination. In some embodiments, the system provides sealing to accommodate high pressure using sealing gaskets and cell compression, materials to accommodate high temperature, The sealing and gasketing design ensure no errant gas emissions escape without first passing through scrubbers or gas purifiers.

The system eliminates stray leakage currents by using non-conductive cell feeds and exits, grounded or non-conductive headers, high resistance fluid paths and/or stray current collectors. Electrically non-conductive fluid inlet and outlet plates are positioned within the compression plates to transfer liquids and gases into and out of the reactor. The inlet and outlet plates are corrosion resistant to the fluid, its components and reaction products. They may consist of polymers, polymer coated metals, ceramics and/or their combination.

A modular electrical busbar assembly connects each electrode to a power supply. Busbar/external circuits are used to minimize hardware electrical iR losses which are practical inefficiencies. Electrode-electrical connector design is used to minimize heat losses and to minimize contact ageing. One busbar is placed between the electrode halves of a single split electrode. As additional cell assemblies are added, additional modular busbars can be added to each electrode. These modular busbars could then be stacked onto each other as needed. When assembled with each other, all individual busbars could then form one single busbar assembly. Thus, the electrical busbar assembly could maintain the scalability of the reactor. The busbar may consist of copper, aluminum, any electrically conductive material and/or their combination. Current collection connector points are strategically placed to limit the current path length and a minimum substrate cross-sectional area for current flow is utilized.

The electrical busbar could be a single threaded rod running the entire length of the reactor. One busbar could run through all working electrodes, and one busbar could run through all counter electrodes. Fasteners could be used at each electrode junction. Thus, the electrical busbar assembly could maintain the scalability of the reactor.

For large volumetric flows of contaminated solutions, the 3D electrodes may be scaled in width, height, and thickness. Multiple unit cells may be stacked and scaled by maintaining current and potential similarity through fixing the inter-electrode gap while increasing the superficial area of individual cells. The unit cells may be stacked into monopolar and bipolar multi-cell arrays which may be sub-divided into voltage steps to limit size and cost of the power supply. Unit cells may also be assembled as electrically separate units. The multi-cell modules may be combined to accommodate low- and high-volume flow capacities. The use of scalable unit cell arrays allows for redundant cells or modules to be installed for handling spikes in PFAS or other micropollutant concentration and perform maintenance without shutting down the system. In addition, cell arrays may be swapped out to introduce improvements in design without interfering with the treatment process. The system is capable of instant startup and shutdown, thus is adaptable for small facilities that have batch treatment requirements.

The assembly may be operated at elevated pressure to reduce the volume of product gases in the split 3D electrodes. However, for applications with frequent idle periods and/or reactor assemblies with hydrogen evolving cathodes, the cross diffusion of dissolved gases into hydrogen-oxygen mixtures would require depressurization and subsequent re-pressurization at start up reducing the service life. It is preferable to operate the reactor assembly at ambient temperature and pressure so there is no startup delay and longer service life. Operating at higher temperature and/or pressure would require a start-up period delay while waiting for the reactor assembly to reach temperature and/or pressure.

For pollutant removal by reduction reactions such as nitrate removal, the working electrode is the cathode, and the counter electrode is the anode. For oxidative mineralization of pollutants such as ammonia, organics, inorganics, micropollutants and per- and polyfluoroalkyl substances, the working electrode is the anode, and the counter electrode is the cathode.

For a working electrode that is mineralizing PFAS or micropollutants by oxidation, the working electrode is the anode. A metal oxide electrocatalyst layer is coated onto the split 3D anode substrate. The substrate may be titanium, niobium or other electrically conducting materials whose breakdown voltage exceed the cell operating voltage. The catalyst provides high voltage, direct electron transfer single-step mineralization, rapid charge transfer, low oxygen evolution, reduced hydroxyl radical and reactive oxygen species generation. The anode is designed to rapidly mineralize both organic and inorganic micropollutants, and long- and short-chain PFASs without breakdown by-products at anodic voltages greater than the thermoneutral PFASs decomposition voltages by direct electron transfer reactions. The anode half-cell reactions for contaminants of concern are shown in Table 1. The single-step, direct electron transfer mineralization process provides complete PFAS decomposition by oxidation to fluoride ion and CO₂ end-products with no intermediate short-chain by-products. Single step mineralization of organic compounds provides complete decomposition to CO₂ and N₂ end products. Suitable electrocatalysts include boron doped diamond, titanium magneli phase suboxides, doped tin oxide, platinum and its alloys, noble metal oxides, lead dioxide, doped lead dioxide and/or their combinations. Other mixed oxides and their doped compositions may be combined with the active electrocatalyst for durability enhancement including niobium oxide, tantalum oxide, cerium oxide, manganese oxide, zirconium oxide, titanium oxide and/or their mixtures and combinations. Rare earth elements or their oxides and sulfides may also be incorporated into the catalyst layer.

For a working electrode that is mineralizing PFAS or micropollutants the undesirable and detrimental generation of hydroxyl radical and reactive oxygen may reduce the durability of the ionomer membrane. Oxidant scavengers such as cerium oxide, CeZrO₂, cerium phosphate, SnCeO₂ and their mixtures may be coated on top of the electrocatalyst layer, incorporated into the electrocatalyst layer and 3D electrode substrates, coated onto the 3D electrode substrate underneath the electrocatalyst layer, and/or coated onto the surface of the membrane.

**Table 1. Single-Step PFAS, organics, ammonia mineralization**

| Mineralization reactions at anode electrocatalyst | |
|---|---|
| Perfluorocarboxylic acids (PFCAs) | CₙF₂ₙ+₁COOH + 2nH₂O(l) → (n+1)CO₂(g) + (2n+1)F⁻ + (4n+1)H⁺ + 2ne⁻ |
| Perfluorosulfonic acids (PFSAs) | CₙHF₂ₙ+₁O₃S + (2n+1)H₂O(l) → SO₄²⁻ + nCO₂(g) + (2n+1)F⁻+(4n+3)H⁺ + 2ne⁻ |
| Fluorotelomer alcohols | F(CF₂CF₂)ₙCH₂CH₂OH + (4n+4)H₂O(l) → (2n+2)CO₂(g) + (4n+1)F⁻+(8n+13)H⁺ + (4n+12)e- |
| Fluorotelomer sulfonates | CF₃(CF₂)ₙ₋₁CH₂CH₂SO₃⁻ + (2n+5)H₂O(l) → SO₄²⁻ + (2+n)CO₂(g) + (2n+1)F⁻+(4n+14)H⁺ + (2n+12)e- |
| Organic compounds | CₐH_{b}O_{c}N_{d} + (2a-c)H₂O(l) → aCO₂(g) + dNH₃(l) + (4a-2c+b-3d)H⁺ + (4a-2c+b-3d)e⁻ |
| Ammonia | 2NH₃ → N₂(g) + 6H⁺ + 6e⁻ |
| | 2NH₄⁺ → N₂(g) + 8H⁺ + 8e⁻ |

For a working electrode that is mineralizing PFAS or micropollutants by oxidation, the counter electrode is the cathode. The protons produced at the anode are transported through the ion conductive membrane to the cathode and the produced electrons are transported through the electrical connections to the cathode. The cathode electrocatalyst may be H₂ reaction dominant and the protons and electrons combine to form hydrogen according to the half-cell reaction:

2H⁺ + 2e⁻ → H₂(g)

With the osmotically dragged water directed to the contaminated solution or pre-treatment oxidation unit.

Alternatively, the cathode may be depolarized by suppling oxygen to the counter electrode compartment and the half-cell reaction is:

4 H⁺ + 4 e⁻ + O₂(g) → 2 H₂O(I)

With the produced catholyte water and/or excess electrolyte being directed to the contaminated solution and/or the pre-treatment oxidation unit.

The cathode electrocatalyst must have a high chemical and electrochemical stability and may consist of catalyst particles and/or catalyst decorated particles of different shapes and sizes, an electrocatalytic coating on an electrically conducting substrate and/or mixtures of these. The electrocatalyst/catalyst layer consists of one or more of Ni-Pt, Ni-Ru, Pd-Ni, Ag, Pd-Ag, Pt-Ru, Pt-Rh, Raney nickel doped with Pt &/or Pd, Cu-doped ZnO, Ru, RuO₂, Ni-Mo and RuO₂, Pt, Pd, Pb, Zn, Fe, Sn, Pd-Sn, Pd-In, Cu, CuZn, CuNi, Ag, Rh, Ru, RhS, Pt, CoTMMP and their alloys and mixtures.

For oxygen depolarized cathodes (ODC), the undesirable and detrimental generation of hydrogen peroxide, hydroxyl radical and reactive oxygen species instead of water may reduce the durability of the ionomer membrane. Oxidant scavengers such as cerium oxide, CeZrO₂, cerium phosphate, SnCeO₂ and their mixtures may be incorporated into the electrocatalyst layer and 3D electrode substrates and/or coated onto the 3D electrode substrate underneath the electrocatalyst layer and the surface of the membrane.

All electrocatalysts for oxidation and reduction reactions (both working and counter electrode reactions) must have good electron charge transfer properties at the electrocatalyst/pollutant and electrocatalyst/electrolyte interfaces.

All 3D electrodes and electrocatalysts for oxidation and reduction reactions (both working and counter electrode reactions) must have good gas bubble release properties. No hydrophobic surfaces or phases should be present on the membrane faces, electrode substrates and electrocatalyst layers.

The cathode substrate material must have good electrical conductivity to provide for uniform voltage and current distribution, corrosion resistance and electrochemical stability. The substrate may include one or more or combinations of expanded metal, mesh screen, sintered mesh, sintered random fiber mat, plate, particles, nonwovens and wovens. Suitable electrode substrate materials include electrically conductive metals and their alloys, metal oxides, metal matrix composites, carbon, and graphite. The electrically conductive substrate may contain one or more electrically conductive, barrier coating layers. The barrier layer should provide good electrical charge transport between base metal substrate and catalyst, a low ionic conductivity and non-porous. For example, the catalyst layer may be coated onto a nickel mesh substrate coated with a Pd protection zone.

Reducing the formation of hydroxyl radicals and other oxygen and inorganic radicals prevents partial oxidation and the subsequent formation of short-chain PFAS or organic by-products. Consequently, the preferred electrocatalysts are platinum and its alloys, lead dioxide, doped lead dioxide and/or their combinations. Mixtures of these catalysts with other mixed metal oxides for durability improvement is preferred and the oxides include niobium oxide, doped niobium oxide, tantalum oxide, cerium oxide, manganese oxide, rare earths and/or their combinations. Electrocatalysts that evolve oxygen versus chlorine are preferred to minimize chlorine evolution and disinfection by-products.

Simultaneous mineralization of co-pollutants such as organics and inorganics with PFASs is beneficial for eliminating pre-treatment processes such as stripping, carbon adsorption and/or advanced oxidation processes thereby reducing total treatment cost.

To mineralize pollutants in high hardness contaminated water solutions, an electrolye with acidic pH increases the cathode half-cell voltage thereby reducing overall cell voltage and energy consumption, and preventing cathode fouling. Calcium and magnesium are the main elemental materials that cause the cathode deposits. The solid ion membrane divider acts as a barrier to the bicarbonate ion but not calcium and magnesium ions. Hardness deposits are thereby prevented by the acidic pH coupled with the electrolyte flowing through the counter electrode compartment flushing the ions out. To remove the accumulation of hardness ions before the electrolyte is re-circulated back into the compartment, the electrolyte is passed through an ion exchanger or other traditional cation removal unit if the measured hardness is greater than 60 mg/L or preferably greater than 10 mg/L. The ion exchanger is periodically backwashed to the treated solution or the contaminated solution so there is no waste. Consequently, high levels of hardness in the contaminated solutions are easily accommodated by this invention. For cell assemblies and multicell reactors, Joule heating may increase the fluid temperatures. Any temperature rise will increase the rate of parasitic side reactions such as water electrolysis. A cooling unit may be used to cool the recirculating electrolyte so that it provides a recirculating cooling fluid to keep the reactor assemblies at ambient temperature.

The electrolyte temperature leaving the counter electrode compartment is measured and if the temperature is greater than 85°C, or preferably greater than 50°C, the electrolyte is passed through a cooling unit to remove accumulated heat. The cooling unit may be one or more radiators, heat exchangers, Peltier coolers, other suitable cooling devices and/or their combinations.

For cell assemblies and multicell reactors with counter electrode(s) that are hydrogen evolving cathodes, protons are removed from the electrolyte to produce hydrogen gas. This reaction results in an increase of the pH of the electrolyte in the counter electrode compartment. To prevent hardness deposits and keep the half-cell potential constant, the electrolyte pH is measured and if the pH is above 5, it may be lowered by the addition of an acid.

Depending on the contaminated solution conductivity value, the counter electrode electrolyte conductivity may be adjusted to minimize the reactor assembly and/or counter electrode half-cell ionic iR losses. The electrolyte conductivity is measured and if the conductivity is below 500 µS/cm, or preferably below 5 mS/cm, it may be increased by the addition of an acid, base and/or salt. If the contaminated solution conductivity is variable, the electrolyte conductivity may be lowered or increased in proportion to the contaminated solution conductivity and gap, cell assembly current and electrolyte gap to maintain a constant cell assembly ionic iR loss value.

### BRIEF DESCRIPTION OF THE DRAWINGS

The invention may take physical form in certain parts and arrangement of parts, embodiments of which are described in detail in this specification and illustrated in the following drawings which form a part hereof and wherein:
FIG. 1 is an embodiment of the full reactor assembly 400.
FIG. 2 is an exploded view, comprised of the fundamental members needed to form a single split 3D electrode 100
FIG. 3 is an exploded view showing a cell assembly 200, comprised of a single split 3D working electrode 100 between two split 3D counter electrodes 101, with the addition of two ionomer membranes 5 separating the electrodes.
FIG. 4 is an exploded view showing assembled reactor 300, comprised of a single cell assembly 200, between two fluid inlet/outlet plates 7 and two compression plates 5.
FIG. 5 is an exploded view, comprised of modular electrical bus bar members to complete the full reactor assembly 400.
FIG. 6 is a modified embodiment of full reactor assembly 400.
FIG. 7 is a modified embodiment of full reactor assembly 400.
FIG. 8 is a modified embodiment of full reactor assembly 400.
FIG. 9 is a flowsheet representation of the water treatment process.
FIG. 10 is a flowsheet representation of the counter-electrode electrolyte closed loop.
FIG. 11 is an example of a water treatment system.
FIG. 12 is an example of a packed media filter unit.
FIG. 13 is an example of free chlorine removal unit.
FIG. 14 is another embodiment of a water treatment system.

### DETAILED DESCRIPTION OF THE DRAWINGS

Referring now to the drawings wherein the showings are for purposes of illustrating embodiments of the invention only and not for purposes of limiting the same, and wherein like reference numerals are understood to refer to like components.

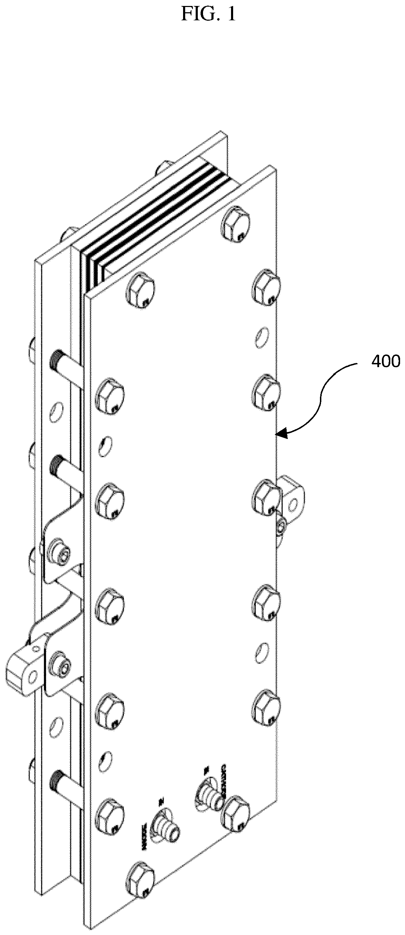

Figure 1 shows one embodiment 400 of the full reactor assembly.

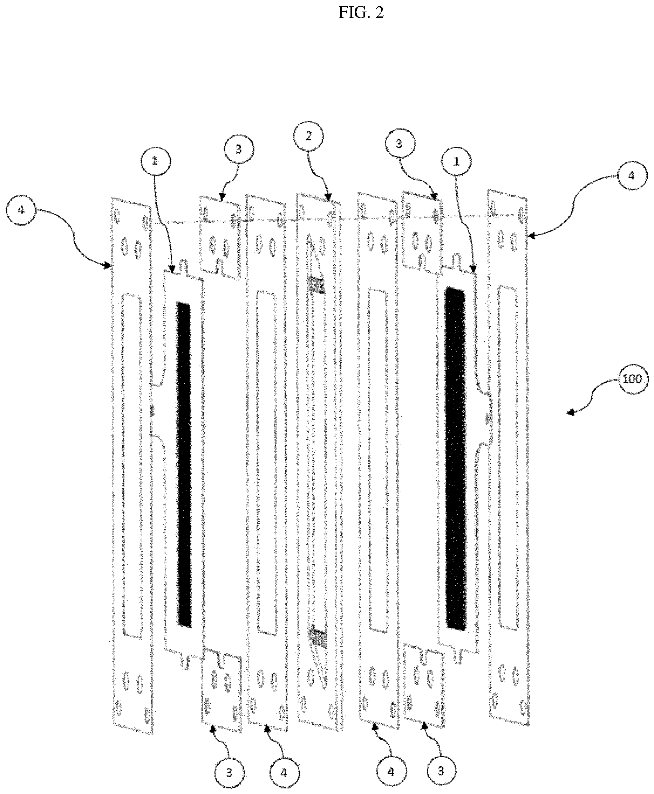

With reference now to Figure 2, the exploded view of 100, showing the components needed for a single split 3D electrode assembly. Assembly 100 being comprised of a centrally positioned fluid housing 2, immediately surrounded on each side by two sealing gaskets 4. The fluid housing 2 forms the electrode compartment surrounded by the electrode plates 1. The fluid housing containing an inlet and outlet for transfer of liquid and/or gases and a fluid distributor feature at both inlet and outlet. Each single piece 1 having an electrically conductive 3D porous substrate coated with an electrocatalyst in the center and solid electrically conductive frame to collect and/or distribute the current to the busbar assembly 500. Plate 1 is the only conductive component of the electrode assembly 100.The electrically conductive electrodes 1 are integrated with two non-conductive frame inserts 3, to form one single electrode assembly 100. , The electrode frame insert 3 provides electrode alignment, gasket sealing, and fluid plumbing. Assembly 100 is completed by the addition of two final sealing gaskets 4 on each side of the assembly. Counter electrode assembly 101 being composed and assembled in the same manner as assembly 100.

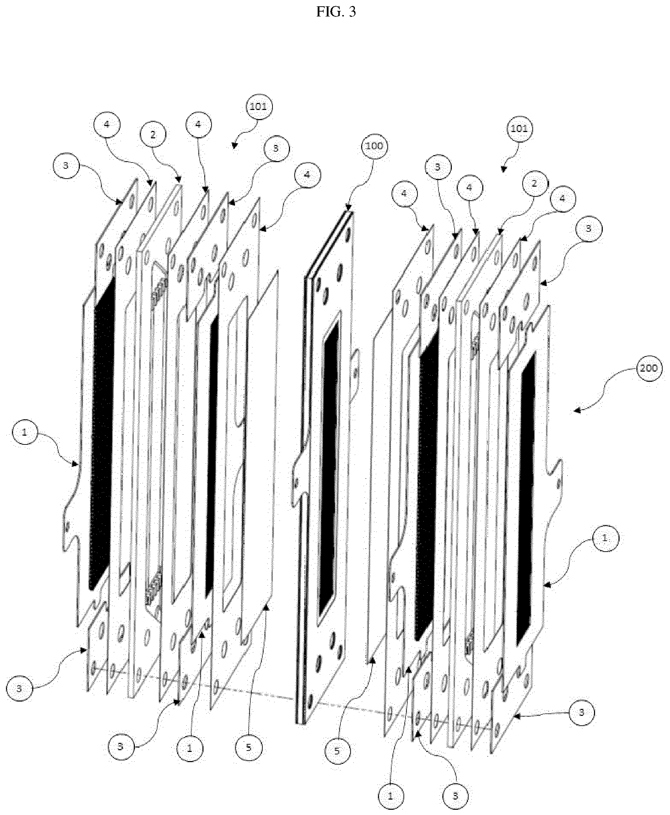

With reference now to Figure 3, the exploded view of assembly 200, showing the components needed to form a single cell assembly. Assembly 200 being comprised of centrally positioned working electrode 100, surrounded on each side by the components needed to form counter electrode assemblies 101. Counter electrode assembly 101 being composed and assembled in the same manner as working electrode 100. The cell assembly 200 containing ion conducting divider 5 between the 100 working electrode and the two 101 counter electrodes. A single cell assembly 200 being comprised of one working electrode and two counter electrodes. Additional cell assemblies 200 can be added to the reactor scaling it up as needed.

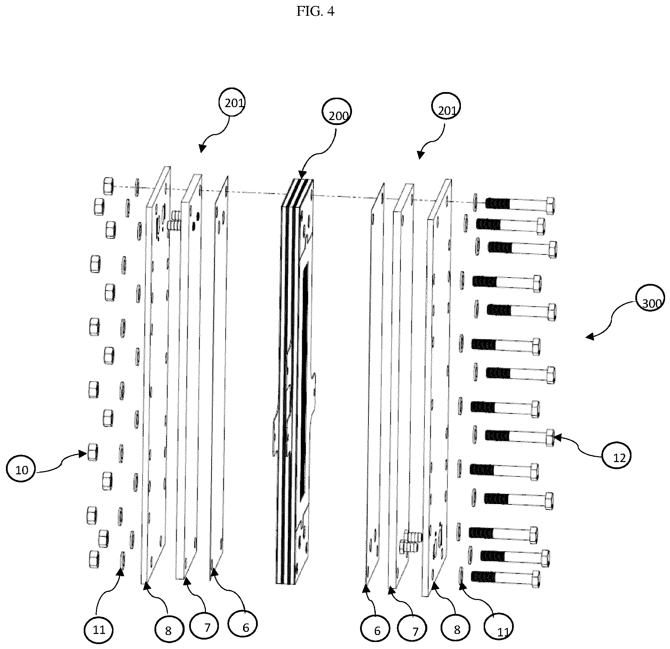

With reference now to Figure 4, the exploded view of assembly 300, showing the components needed to form a single cell reactor, which excludes any electrical bus bar members. Assembly 300 being comprised of a centrally positioned 200 single cell assembly, surrounded on each side by two compression plates 8 and two fluid inlet/outlet plates 7. The combination of a single compression plate with a single inlet/outlet plate, constituting an external housing plate assembly 201. Sealing gaskets 6 to be positioned between the single cell assembly 200 and the housing plate assemblies 201. Fasteners 10, 11, and 12 could be used to align internal members, and to apply a compression force to the compression plates, to seal all internal gaskets. In other embodiments of assembly 300, fasteners 10, 11 and 12 could be incorporated into the compression plates, or into an external housing. In another embodiment, all fastening members used to apply force to the compression plates could be replaced by a mechanical compression device such as pneumatics or an electrical motor.

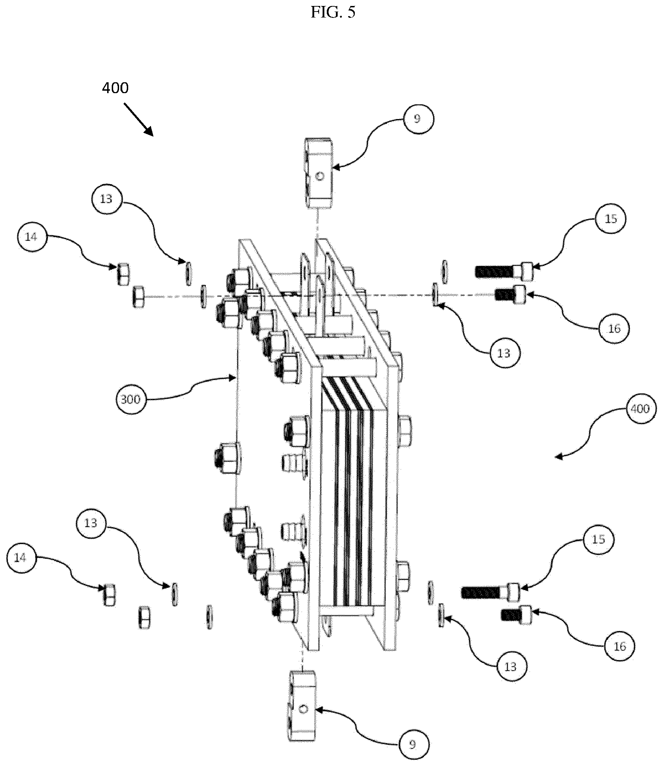

Figure 5 shows the same embodiment 400 in an exploded view, with fasteners 13, 14, 15, and 16 used to secure modular bus bar 9. Modular bus bar 9 to be stacked onto additional modular busbars as needed, allowing for reactor scalability. Assembly 300 is the base reactor assembly, without any of the bus bar related members. In other embodiments of assembly 400, bus bar 9 and related fasteners 13, 14, 15, and 16 could be replaced with a threaded busbar rod. This type of busbar rod could run the entire length of the reactor, through the working electrodes, with a separate bus bar rod running through the counter electrodes. Fasteners could be used at each electrode junction, to secure the busbar to the electrodes. Additionally, the threaded busbar rods could be incorporated into an external housing or compression plate. Thus, the electrical busbar assembly could maintain the scalability of the reactor.

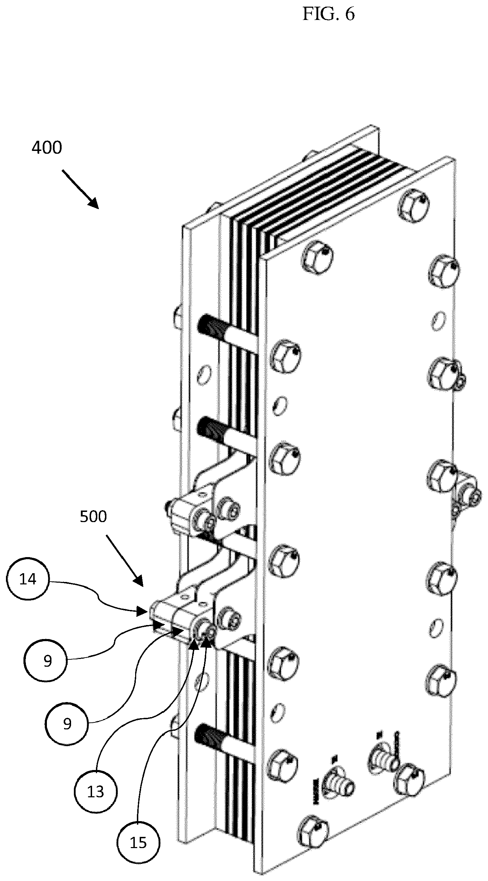

Figure 6 is a modified embodiment of full reactor assembly 400, showing the scalability of bus bar assembly 500. As additional working electrodes 100 and counter electrodes 101 are added, additional modular bus bars 9 are also added, creating a bus bar assembly 500.

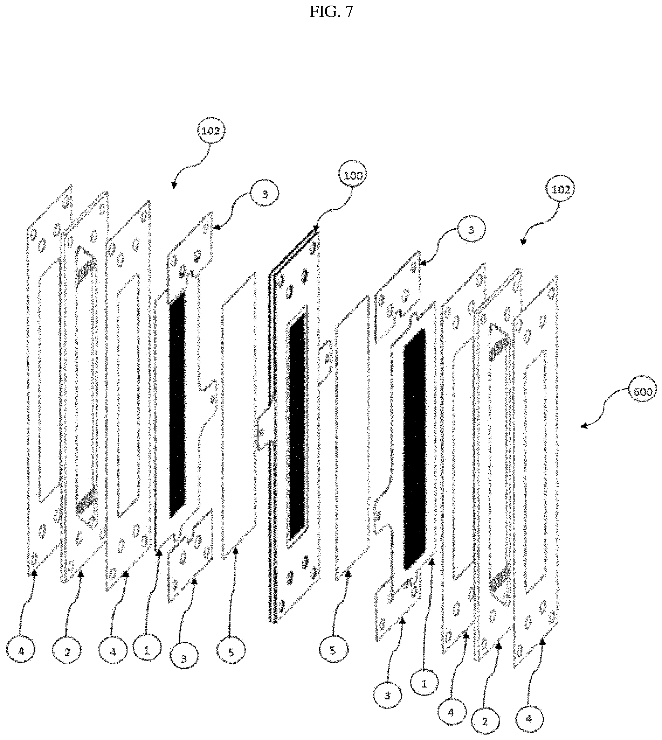

Figure 7 is a modified embodiment of full reactor assembly 400, wherein the counter electrodes 101 have been modified and reduced to single half electrodes 1, while the working electrode 100 remains the same. Thus, full assembly 600 consists of a traditional two-piece working electrode 100, surrounded by two single half counter electrodes 102.

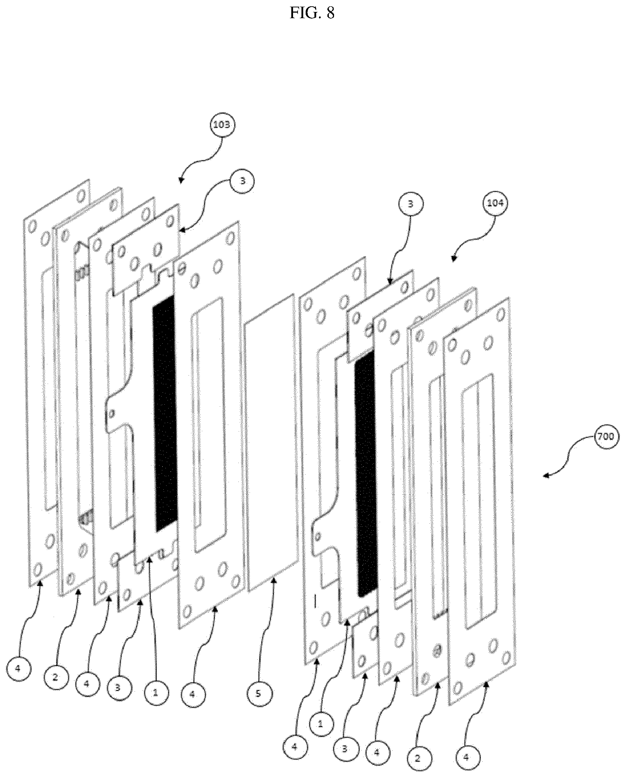

Figure 8 is a modified embodiment of full reactor assembly 400, wherein the counter electrodes 101 and the working electrodes 100 have been modified and reduced to single half electrodes. Thus, full assembly 700 consists of a single half working electrode 103 and a single half counter electrode 104. Counter electrode 104 being comprised of a centrally positioned fluid housing 2, immediately surrounded on each side by two sealing gaskets 4. The fluid housing 2 forms the electrode compartment surrounded by the single electrode plate 1. The fluid housing containing an inlet and outlet for transfer of liquid and/or gases and a fluid distributor feature at both inlet and outlet. Each electrode plate 1 having an electrically conductive 3D porous substrate coated with an electrocatalyst in the center and solid electrically conductive frame to collect and/or distribute the current to the busbar assembly 500. The electrically conductive electrodes 1 are integrated with non-conductive frame inserts 3, to form one single electrode assembly 104. Insert 3 provides electrode alignment, gasket sealing, and fluid plumbing. Assembly 104 is completed by the addition of two final sealing gaskets 4 on each side of the assembly. Counter electrode assembly 101 being composed and assembled in the same manner as assembly 100.

FIG. 9 illustrates an example flowsheet representation of the water treatment process.

FIG. 10 illustrates an example flowsheet representation of the counter-electrode electrolyte closed loop.

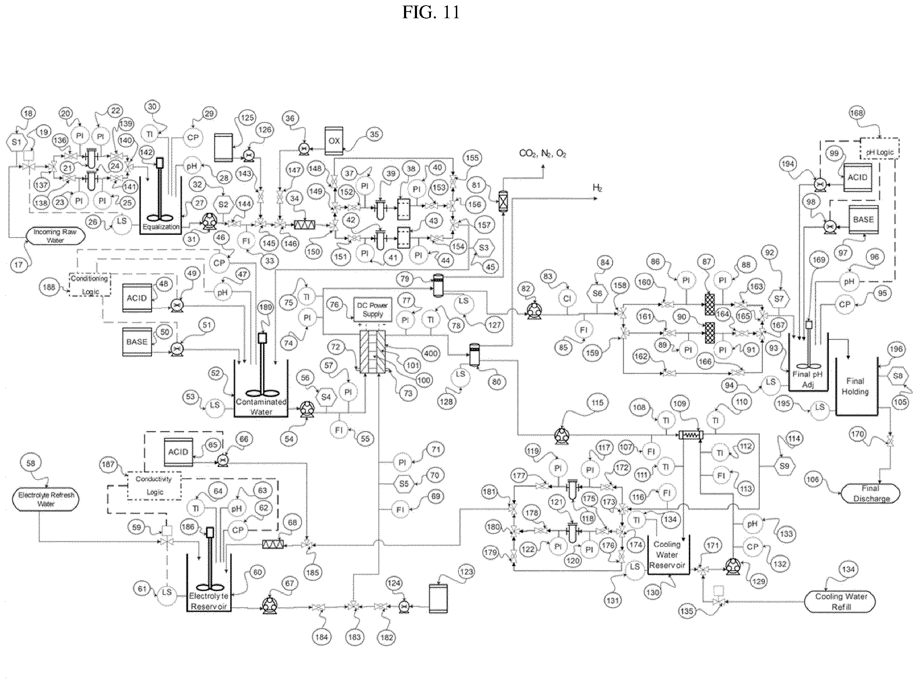

Figure 11 is an example of a water system arranged in accordance with the present invention. Contaminated water 17 first flows through a filter train equipped with filters 21,22 to screen out large particles and to prevent any plugging in the treatment process. Sample port S1 18, located in front of the filter train, is used for sampling the contaminated water quality for contaminants and other constituents. The contaminated water enters through a tee 137 and is piped to either side of the filter train. On the inlet and outlet to the filter train, pressure indicators 20,22 and 23,25 indicate pressure drop, signaling when the filters need to be cleaned or replaced. One set of filters is used at a time to allow for cleaning or replacement, this accomplished by opening or closing valves 136,139 for one side and opening or closing valves 138,141 for the other side. The contaminated water leaves the filter train through a tee 138 and enters an equalization tank 27 that is equipped with a mixer 142. The tank is also equipped with a temperature indicator 30, conductivity probe 29 and pH probe 28 to monitor water quality. The equalization tank has a level sensor 26, to control a solenoid valve 19 to maintain water level. The contaminated water is pumped from the equalization tank 27 by pump 31 to an oxidation section to aid in removal of contaminants. If the oxidation is needed a valve 147 is opened and oxidant enters the system through a tee 146. A sample port S2 32 is located after the pump for sampling the contaminated water for contaminants and other constituents. A flow indicator 33 measures flow rate into the oxidation section where an oxidant 35 is added to the contaminated water by dosing pump 36. The control of oxidant dosing is proportional to the flow rate. Following the oxidant dosing point, a static inline mixer 34 promotes complete oxidant mixing and reaction. The water is then directed to a filter train through a tee 150 containing fine mesh sediment filters 39,42 that will remove particles greater than five microns in diameter. The water will then flow through activated packed media filters 38,43 that will remove ions that can hinder electrolyzer performance. On the inlet and outlet to the sediment filters 39,42 and packed media filters 38,43, pressure indicators 37,41 and 40,44 indicate pressure drop, signaling when the filters need to be cleaned or replaced. There is also a bypass that can be used by opening valves 148,155 and closing all other valves 151,152,153,154, typical operation is to have valves 148,155 closed. One set of filters is used at a time to allow for cleaning or replacement, this accomplished by opening or closing valves 152,153 for one side and opening or closing valves 151,154 for the other side. Tees 149,156,157 are used to ensure flow is directed in the correct direction. A water sample port S3 45, for analysis, is located prior to flowing into a contaminated water tank 52 equipped with a mixer 189 and a level sensor 53. The contaminated water tank 52 is also equipped with a conductivity probe 46 and a pH probe 47 both used to monitor and control pH and conductivity. The pH and conductivity are adjusted by adding an acid 48 with a dosing pump 49 or a base 50 with a dosing pump 51, this is completed using a condition logic 188 based on treatment goals. The contaminated solution is then fed to the working electrode compartment 100 of electrolyzer 400 by pump 54. Water is sampled at port S4 56 for analysis and flow indicator 55 measures the flow entering the electrolyzer 400. The flow rate can be increased or decreased automatically based on operating conditions. A pressure indicator 57 at the inlet of the working electrode compartment(s) and a pressure indicator 74 at the outlet of the working electrode compartment(s) will measure pressure changes in the electrolyzer 400. A temperature indicator 75 measures the outlet temperature of the working electrode compartment(s) for monitoring and control purposes. A power supply 76 applies Direct Current (DC) voltage to the electrolyzer 400. Reference electrodes 72,73 measure the working electrode voltage at a location furthest away from the busbar feeder. The treated water and product gas exit the electrolyzer 400 and flow to a liquid-gas separation unit 79 that is equipped a mist eliminator and a level sensor 127 for monitoring and control purposes. A chlorine analyzer 83 measures free chlorine and a flow indicator 85 measures the flow rate of the treated water leaving the liquid-gas separator 79. Water sample port S6 84 is located after the liquid-gas separator 79. The working electrode product gas leaves the liquid-gas separator 79 and is passed through a scrubber 81 containing proper packing or an alkali wash for removal of any volatile contaminants. The treated water exits the liquid-gas separator and is pumped to a filter train though a tee 158 containing carbon block filters 87,90 to remove any residual contaminants or reaction products such as free chlorine by pump 82. On the inlet and outlet to the filter train, pressure indicators 86,89 and 88,91 indicate pressure drop, signaling when the filters need to be cleaned or replaced. There is also a bypass that can be used by opening valves 162,166 and closing all other valves 160,161,163,164, typical operation is to have valves 162,166 closed. One set of filters is used at a time to allow for cleaning or replacement, this accomplished by opening or closing valves 161,164 for one side and opening or closing valves 160,163 for the other side. Tees 159,165,167 are used to ensure flow is directed in the correct direction.

Sample port S7 92 for water analysis is located after the filter train. The treated water leaves the filter train and flows to a pH adjustment tank 93 equipped with a mixer 169 and a level sensor 94. A conductivity probe 95 and pH probe 96 are used for monitoring and control purposes. The pH probe 96 is used to control the addition of a base 97 with a dosing pump 98 or an acid 99 with a dosing pump 194 to meet pH discharge requirements and is controlled with a pH logic loop 168. The treated water is then directed to a final holding tank 196 equipped with a level sensor 195. Water samples are collected at sample port S8 105 to determine if treatment is complete, if treatment goals are met a valve 170 is opened and the treated water is directed to final discharge 106.

An electrolyte reservoir 60 equipped with a mixer 186 contains a temperature indicator 64, pH probe 63 and a conductivity probe 62 for monitoring and control purposes. The conductivity of the electrolyte solution is controlled by acid 65 addition using a dosing pump 66 with an inline static mixer 68 after tee 185 and a solenoid valve 59 opening a low conductivity electrolyte refresh water for control purposes 58, this is accomplished using a conductivity logic 187 control loop. A level sensor 61 monitors and controls the tank level using a solenoid valve 59. The electrolyte solution is pumped to the electrolyzer 400 counter electrode compartment(s) 101 by pump 67. A flow indicator 69 measures the flow rate and may be increased or decreased automatically depending on operating conditions. A sample port S5 70 is used to sample water for analysis prior to entering the electrolyzer 400. A pressure indicator 71 at the inlet of the electrolyzer's 400 counter electrode compartment(s) and a pressure indicator 77 at the outlet of the counter electrode compartment(s) measures pressure drop. A temperature indicator 78 is used for monitoring and control purposes of the electrolyte solution. The electrolyte solution and counter electrode product gas exit the electrolyzer 400 to a liquid-gas separation unit 80 that is equipped with a mist eliminator and a level sensor 128 for monitoring and control purposes. The counter electrode product gas leaves the liquid-gas separation unit 80 and is directed to capture for off-take purposes and/or vented to the atmosphere. The electrolyte solution is pumped from the electrolyte liquid-gas separator by a pump 115 to a heat exchanger 109. A flow indicator 107 measures flow rate and a temperature indicator 108 monitors the temperature of the electrolyte entering the heat exchanger 109. A temperature indicator 110 measure the temperature of the electrolyte solution exiting the heat exchanger 109 for control and monitoring purposes. Cooling water is stored in a cooling water reservoir 130 equipped with a level sensor 131 controlling a solenoid valve 135 that opens and refills the tank from a cooling water refill source 134 through a tee 171 a temperature indicator 134 is also used for control purposes. The cooling water is pumped from to the cooling side of the heat exchanger 109 by pump 129 where a flow indicator 113 monitors and controls the flow rate through the cooling side of the heat exchanger 109. A temperature indicator 112 located on the cool side inlet and a temperature indicator 111 located on the cool side outlet are used for monitoring and control purposes. A pH probe 133 and a conductivity probe 132 monitor the cooling water loop. The electrolyte solution exits the heat exchanger 109 and flows to an electrolyte filter train where an electrolyte sample can be collected from sample port S9 114for quality analysis. A flow indicator 116 monitors the flow of the electrolyte into the filter train. The electrolyte enters a filter train through tee 173 contains fine mesh sediment filters 118,121 to remove particles that could be introduced to the electrolyte through corrosion of the counter electrode or the heat exchanger. On the inlet and outlet to the filter train pressure indicators 117,120 and 119,122 indicate pressure drop, signaling when the filters need to be cleaned or replaced. There is also a bypass that can be used by opening valves 176,179 and closing all other valves 172,175,177,178, typical operation is to have valves 176,179 closed. One set of filters is used at a time to allow for cleaning or replacement, this accomplished by opening or closing valves 172,177 for one side and opening or closing valves 175,178 for the other side. Tees 174,180,181 are used to ensure flow is directed in the correct direction. The electrolyte solution then flows back to the electrolyte reservoir 60 for recirculation through the electrolyzer 400. Clean-in-place of the working electrode compartments of the electrolyzer 400 is provided by cleaning solution 125 circulated through the working electrode compartments of the electrolyzer 400 by pump 126. A valve 143 is opened during clean-in-place while valve 144 is closed to prevent any backflow of cleaning solution 125 to the equalization tank 27. Cleaning solution 125 enters the system through a tee 145. Once the cleaning of the working electrode compartment(s) is completed valve 143 is closed and valve 144 is opened. Clean-in-place of the counter electrode compartment(s) of the electrolyzer 400 is provided by cleaning solution 123 circulated through the counter electrode compartment(s) of the electrolyzer 400 by pump 124. A valve 182 is opened during clean-in-place while valve 184 is closed to prevent any backflow of cleaning solution 123 to the electrolyte reservoir 60. Cleaning solution 123 enters the system through a tee 183. Once the cleaning of the counter electrode compartment(s) is completed valve 182 is closed and valve 186 is opened.

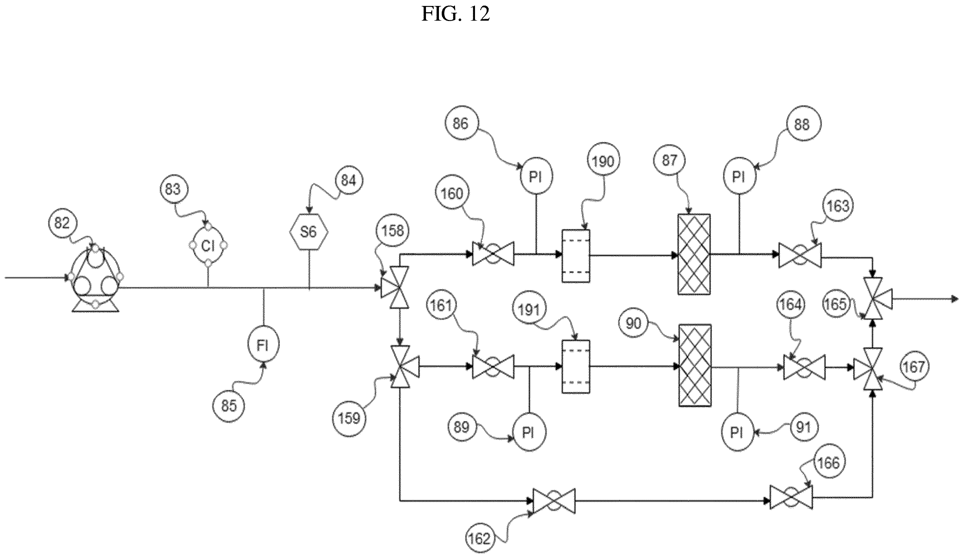

Figure 12 is another embodiment of the post treatment process in which packed media filters 190,191 have been placed to remove chlorine from typical operation and other metals that may end up in the treated effluent from working electrode corrosion.

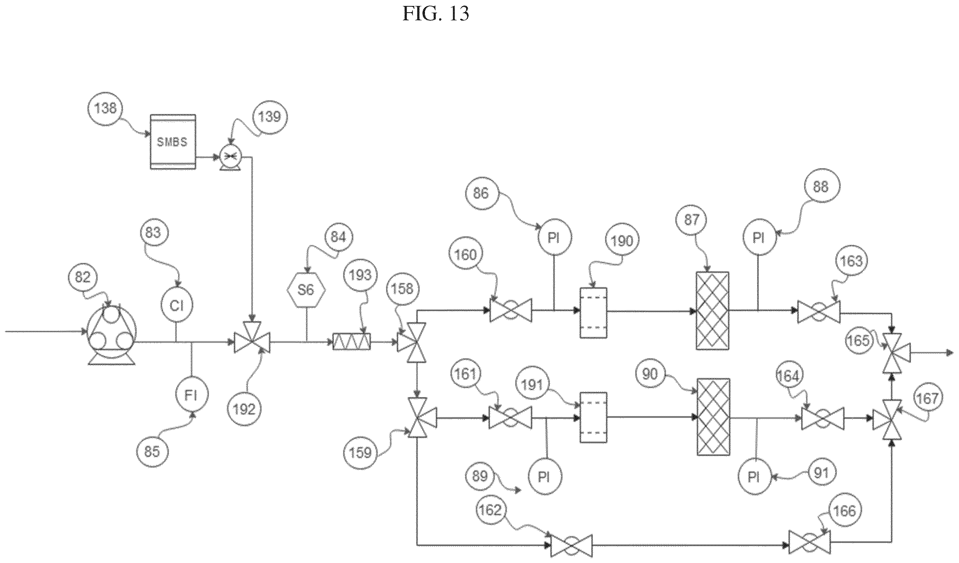

Figure 13 is another embodiment a water treatment system containing an optional free chlorine removal unit. The treated water from the liquid-gas separator 79 is pumped to the free chlorine removal unit by pump 82. The chlorine analyzer 83 measures free chlorine and provides feedback to a dosing pump 139 to dose sodium metabisulfite 138 into the treated water through tee 192 followed by an inline static mixer 193 to ensure complete mixing and removal of free chlorine. The treated water then flows to the packed media filters 136, 137 followed by carbon block filters 87, 90 effectively removing all free chlorine. On the inlet and outlet to the media and carbon block filters, pressure indicators 86,89 and 88,91 respectively indicate pressure drop, signaling when the filters need to be cleaned or replaced.

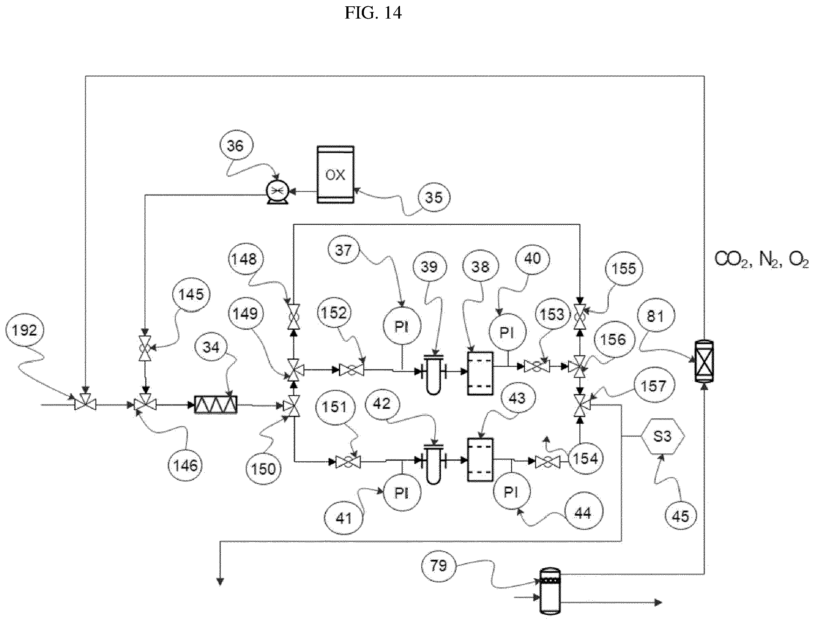

Figure 14 is another embodiment of a water treatment system depicting the off gas from the working electrode scrubber 81 being directed to a tee 194 prior to the static mixer 34.

## Claims

1. An electrode assembly comprising
a working electrode,
a counter electrode, and
a cell divider positioned between the working electrode and counter electrode;
wherein said cell divider comprises an ion conducting membrane
wherein said ion conducting membrane selectively conducts protons or hydroxyl anions but is an electronic insulator and a barrier to liquid, contaminant, and gas exchange.

2. The electrode assembly of claim 1 wherein said ion conducting membrane is impermeable to contaminated solutions, individual contaminants, working electrode product gases, and counter electrode electrolyte solution and counter electrode product gases.

3. The electrode assembly of claim 1 wherein said cell divider is coated on one or more faces with a protective layer,
wherein said protective layer is comprised of one or more durable metal oxides and is impermeable to the contaminated solutions and electrolyte solutions.

4. The electrode assembly of claim 1 wherein said durable metal oxides are selected from the group consisting of titanium oxide, tin oxide, zinc oxide, tungsten oxide, tantalum oxide, niobium oxide, and boron doped diamond.

5. The electrode assembly of claim 1, wherein at least one of said working electrode or counter electrode is coated with an insulating protective coating or includes a porous film that prevents the electrocatalytic oxidation of the ion conducting membrane.

6. The electrode assembly of claim 1, wherein the counter electrode comprises:
at least one single half counter electrode wherein the at least one single half counter electrode comprises:
a fluid housing (2), wherein the fluid housing (2) comprises an inlet and outlet suitable for transfer of liquid and/or gases and a fluid distributor positioned at both the inlet and the outlet;
at least three sealing gaskets (4) wherein at least one sealing gasket is positioned on either side of the fluid housing (2) in a widthwise direction.
at least one electrode plate (1) wherein the electrode plate is positioned between two sealing gaskets (4) in a widthwise direction, but not the same two sealing gaskets positioned on either side of the fluid housing (2) in a widthwise direction.

7. The electrode assembly of claim 1 wherein the at least single half counter electrode additionally comprises at least two spacers (3) posited between the at least one electrode plate (1) and one of the sealing gaskets (4) in a widthwise direction.

8. The electrode assembly of claim 1 wherein the electrode plate (1) comprises an electrochemically active 3-D porous substrate.

9. The electrode assembly of claim 1, additionally comprising:
a modular bus bar 9 and fasteners which enclose the electrode assembly and allow for modular attachment of additional electrode assemblies via a physical attachment of modular bus bars from a plurality of electrode assemblies.

10. The electrode assembly of claim 9, additionally comprising at least one additional electrode assembly, wherein said plurality of electrode assemblies are attached via the modular bus bars located on each said plurality of electrode assemblies.

11. The electrode assembly of claim 1 wherein said ion conducting membrane comprises an oxidant scavenger such as cerium 3+ or 4+ ion, cerium oxide nanoparticles, doped cerium oxide, zirconia and/or their combination throughout the material and/or a coating on the surfaces of the membrane.

12. The electrode assembly of claim 3 wherein the protective layer is applied on top of the one or more membrane faces after the one or more membrane faces have been coated with an oxidant scavenger layer, or
wherein the protective layer comprises an oxidant scavenger layer and is applied on top of the one or more membrane faces.

13. The electrode assembly of claim 1 wherein said cell divider is coated on one or more faces with one or more protective layers and oxidant scavenger layers
wherein said protective layer is comprised of one or more durable metal oxides and is impermeable to the contaminated solutions and electrolyte solutions.

14. The electrode assembly of claim 5 wherein the porous film is positioned between the interface between the working electrode or counter electrode and the ion conducting membrane,
wherein the porous film consists of an oxidant scavenger only or a mixture of an oxidant scavenger and an insulating protective material or insulating protective coating.

15. The electrode assembly of claim 14 wherein the porous film comprises of a mixture of an oxidant scavenger and an insulating protective material or insulating protective coating,
wherein the insulating protective material comprises of a polymer mesh, metal mesh, metal, polymer, glass and/or carbon fiber paper or other suitable porous film, and
wherein the insulating protective coating comprises CeO₂, SiO₂, Al₂O₃, porcelain, or quartz.

16. A contaminated solution treatment process comprising:
feeding the contaminated solution into the electrode assembly of claim 1, and recirculating an electrolyte solution through the at least one single half counter electrode.

17. The contaminated solution treatment process of claim 16 additionally comprising:
recirculating an electrolyte solution through one or more counter electrode compartments, wherein the electrolyte solution is directed through the counter electrode compartment(s) and passes through a liquid-gas separator after exiting the compartment which removes the counter electrode gases
separating product gas from the electrolyte solution,
wherein the electrolyte solution has a hardness of below 60 mg/L and a conductivity above 500µS/cm, and a pH of 6 or less.
